(19) Europäisches Patentamt
European Patent Office
Office européen des brevets

(11) Publication number: 0 328 580 B1

(12) # EUROPEAN PATENT SPECIFICATION

(45) Date of publication of patent specification: **21.07.93**

(51) Int. Cl.$^5$: **C08F 4/64**

(21) Application number: **88906554.6**

(22) Date of filing: **17.06.88**

(86) International application number:
**PCT/US88/02111**

(87) International publication number:
**WO 88/10275 (29.12.88 88/28)**

The file contains technical information submitted after the application was filed and not included in this specification

(54) **CATALYST AND PROCESS FOR PREPARATION OF SYNDIOTACTIC POLYSTYRENE.**

(30) Priority: **17.06.87 US 64282**

(43) Date of publication of application:
**23.08.89 Bulletin 89/34**

(45) Publication of the grant of the patent:
**21.07.93 Bulletin 93/29**

(84) Designated Contracting States:
**AT BE CH DE FR GB IT LI LU NL SE**

(56) References cited:
**EP-A- 0 224 097**
**FR-A- 1 392 785**
**JP-B- 415 379**
**JP-B- 4 222 691**
**US-A- 3 242 099**
**US-A- 3 306 919**
**US-A- 3 663 635**
**US-A- 4 542 199**
**US-A- 4 680 353**

(73) Proprietor: **THE DOW CHEMICAL COMPANY**
**2030 Dow Center Abbott Road P.O. Box 1967**
**Midland Michigan 48640-1967(US)**

(72) Inventor: **CAMPBELL, Richard, E., Jr.**
**5301 Woodview Pass**
**Midland, MI 48640(US)**
Inventor: **HEFNER, John, G.**
**122 Cacao**
**Lake Jackson, TX 77566(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 328 580 B1

## Description

The present invention pertains to a catalyst and a process for polymerizing vinyl aromatic monomers, particularly styrene, to produce syndiotactic polymers. The catalyst is the reaction product of polymethyl aluminoxane and a specific monocyclopentadienyl/titanium complex

It has recently been reported by N. Ishihara, T. Seimiya, M. Kuramoto and M. Uoi in "Crystalline Syndiotactic Polystyrene", Macromolecules, pp 2164-5, (1986) that syndiotactic polystyrene having high stereo regularity had been prepared in the presence of a titanium compound and an organoaluminum compound.

In EP-A-0 210,615 syndiotactic polystyrene polymers were prepared utilizing titanium tetraethoxide, and cyclopentadienyltitanium trichloride complexes in combination with a polymethylaluminoxane cocatalyst.

EP-A-224,097 discloses a process for producing styrene polymers using a catalyst which comprises specific titanium compounds, including cyclopentadienyl titanium trichloride, and organoaluminum compounds, including methylaluminoxane.

According to the present invention there is now provided a process for preparing polymers of vinyl aromatic monomers having a high degree of syndiotacticity comprising contacting one or more aromatic monomers under polymerization conditions with a catalytically effective amount of a catalyst comprising the reaction product of polymethylaluminoxane and a monocyclopentadienyl/titanium complex corresponding to the formula: $CpTiX_3$, wherein Cp is a $\pi$-bonded cyclopentadienyl group, a $\pi$-bonded substituted or multiply substituted cyclopentadienyl group or a $\pi$-bonded monovalent oligomer of cyclopentadiene and X is independently each occurrence halide, OR, or $NR_2$, wherein R is independently each occurrence an aliphatic, cycloaliphatic or aromatic hydrocarbon group having from 1 to 12 carbon atoms; and provided further that in at least one occurrence X is OR or $NR_2$ and the ratio of Al:Ti in said catalyst is from 10:1 to 50,000:1. By the term aromatic is included both substituted and unsubstituted aryl groups. Prefrably, X is $NR_2$ and R is $CH_3$. Most suitably X is in each occurrence OR and R is selected from the group consisting of phenyl, and $C_{1-6}$ alkyl or cycloalkyl. In a preferred embodiment X is in each occurrence phenoxy.

Surprisingly the yields obtained in the process of the present invention are considerably higher than those obtained in the aforementioned process of EP-A-224,097 although the catalysts used in this process are similar to the catalysts used in the process of the present invention.

The catalyst is normally formed in the presence of an aliphatic, cyoloaliphatic or aromatic solvent or a combination of such solvents. The components are employed in quantities which provide an atomic ratio of Al:Ti from 10:1 to 50,000:1, more suitably from 50:1 to 10,000:1, most suitably from 100:1 to 1000:1.

Another aspect of the present invention pertains to a process for preparing syndiotactic polymers of vinyl aromatic monomers which process comprises contacting at least one polymerizable vinyl aromatic monomer under polymerization conditions in the presence of the previously disclosed catalyst. As used herein, the term "syndiotactic" refers to such polymers having a stereo regular structure of greater than 50 percent syndiotactic as determined by $C^{13}$ nuclear magnetic resonance spectroscopy. Preferably the syndiotacticity is greater than 70 percent. Such polymers may be usefully employed in the preparation of articles and objects (eg., via compression molding or other suitable technique) having an extremely high resistance to deformation due to the effects of temperature. Compared to processes employing cyclopentadienyltitanium trichloride containing catalysts, the present invention achieves improved yields.

The polymethylaluminoxane may be prepared according to any known technique. One such technique includes the reaction of trimethylaluminum and a hydrated metal salt as disclosed by Kaminsky in U.S. Patent 4,544,762, the teachings of which are herein incorporated in their entirety by reference thereto. For purposes of calculating the molar ratio of aluminum:titanium in the catalysts of the present invention, the polymethylaluminoxane is assigned a repeating unit structure corresponding to the formula: $(Al(CH_3)O)$.

Following preparation of polymethylaluminoxane a cyclopentadienyltitanium complex, as previously defined, is added to the polymethylaluminoxane along with additional diluent if desired. In addition to unsubstituted cyclopentadienyl derivatives, the metal complexes employed to prepare the catalysts of the present invention illustratively include cyclopentadienyl derivatives containing from 1 to 5 alkyl, aryl or silyl substituents having up to 18 carbons, eg., pentamethylcyclopentadienyl derivatives, penta(trimethylsilyl)-cyclopentadienyl derivatives, etc. and ring fused derivatives such as indenyl titanium complexes and substituted indenyl titanium complexes. It is understood that the complex may be employed in the form of a precursor that is capable of generating the desired cyclopentadienyl/titanium complex in situ. An example includes such complexes additionally incorporating one or more molecules of any nature in the crystal structure, such as alcohol molecules associated with the crystal structure via Van der Waals forces. In the preparation of the catalyst composition, the cyolopentadienyl/titanium complex and the polymethylaluminoxane can be combined in any order. The catalyst components may be suitably mixed in an inert atmosphere

such as nitrogen, argon, xenon, or combinations thereof. The components are mixed at any suitable temperature, preferably from 0 °C to 50 °C, more suitably 25 °C.

The polymerization is conducted at temperatures of from 25 °C to 100 °C, preferably from 30 °C to 60 °C, for a time sufficient to produce the desired polymer. Typical reaction times are from several minutes to several hours, preferably from 1 to 10 hours. The optimum time will vary depending upon the temperature, solvent and other reaction conditions employed. The polymerization is generally conducted under slurry polymerization conditions.

The polymerization can be conducted at subatmospheric pressure as well as superatmospheric pressure, suitably at reduced pressures such that the lowest boiling component(s) of the polymerization mixture does not vaporize up to about $6.895 \times 10^6$ Pa (1000 psig). However, it is preferable that near atmospheric pressure be employed.

Suitable vinyl aromatic monomers which can be polymerized in the process of the present invention include those represented by the formula:

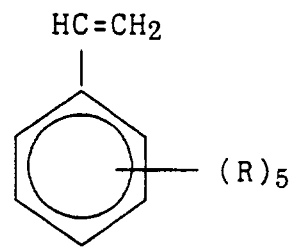

wherein each R is independently hydrogen, an aliphatic, cycloaliphatic or aromatic hydrocarbon group having suitably from 1 to 10, more suitably from 1 to 6, most suitably from 1 to 4, carbon atoms; or a halogen atom. Suitably such monomers include, for example styrene, chlorostyrene, n-butyl styrene, t-butyl styrene and p-vinyl toluene, etc. with styrene being especially suitable.

The polymerization is normally conducted in the presence of an inert diluent. Examples include aliphatic, cyoloaliphatic, aromatic and halogenated aromatic hydrocarbons, as well as mixtures thereof. Preferred diluents comprise the $C_{4-20}$ alkanes, especially branched chain alkanes, toluene and mixtures thereof. A particularly desirable diluent for the polymerization is isooctane, or blends thereof such as Isopar-E®, available from Exxon. Suitable amounts of solvent are employed to provide a monomer concentration from 5 percent to 100 percent by weight. During the polymerisation, polymer may precipitate from the reaction mixture as it is formed.

As in other similar polymerizations it is highly desirable that the monomers and solvents employed be of sufficiently high purity that catalyst deactivation does not occur. Any suitable technique for monomer purification such as devolatilization at reduced pressures, contacting with molecular sieves or high surface area alumina, deaeration, etc. may be employed.

Purification of the resulting polymer to remove entrained catalyst may also be desired by the practitioner. Entrained catalyst may generally be identified by residues of ash on pyrolysis of the polymer that are attributable to aluminum and titanium values. A suitable technique for removing such compounds is by solvent extraction, e.g., extraction utilizing hot, high boiling chlorinated solvents, followed by filtration.

Having described the invention, the following example is provided as further illustrative and is not to be construed as limiting.

Example 1

In a nitrogen atmosphere glovebox, a dry 2 oz (59 ml) bottle is charged with 32 ml of ISOPAR-E™ - (hereinafter IPE), a solution of polymethylaluminoxane (0.325 g., 5.6 mmole, in 7.2 ml IPE), and 220 µl, 22.4 µmole, of a 0.051 M toluene solution of cyclopentadienyltitanium trisphenoxide (formed by the reaction of cyclopentadienyl titanium trichloride and phenol in a 1:3 molar ratio in the presence of an acid scavenger). The resulting solution is then stirred at room temperature for 30 seconds and is then treated with purified, deaerated styrene (7.0 g., 67.3 mmole). The molar ratio of styrene:Al:Ti is 6,000:500:1. The bottle is then sealed with a sure seal cap which is then sealed again with electrical tape and the thus sealed container is placed in a shaker/hot water bath which is maintained at a temperature of 51 °C for 20 hours. The reaction mixture is then hydrolyzed with the addition of 20 ml of methanol, and slurried in 50 ml of 1N aqueous HCl

for 5 minutes. The water is then removed with the use of a separatory funnel. The resultant polystyrene is collected by filtration, washed with methanol and vacuum dried at 110 °C for 24 hours. The yield is 6.78 g (97 percent). The resultant polystyrene has a melting point of 246 °C, >95 percent syndiotacticity by $C^{13}$ analysis, and has a weight average molecular weight (Mw) as determined by gel permeation chromatography utilizing atactic polystyrene standards of 166,400. Number average molecular weight (Mn) determined similarly is 50,600. Results are summarized in Table I.

Examples 2-13

The reaction conditions of Example 1 are substantially repeated excepting that the titanium complexes, solvents, ratios and reaction temperatures of Table I are employed. Results are contained in Table I.

Comparative Examples 14 and 15

These comparative Examples are summarized in Table I. They are not prior art. Note the low yields obtained (in contrast to Examples 1-13).

Examples 16-53

These examples are summarized in Table I, and essentially repeated Example 1 except for the different indications listed in Table I. Examples relating to the preparation of syndiotactic tertiary butylstyrene are of particular interest because the polymers obtained had a molecular weight (Mw) that was too high to measure by gel permeation chromatography (Examples 16, 18, 19, 20, 39, 40, 41 and 42).

**Table I**

| Ex | Complex | Ratio Styrene:Al:Ti | Solvent[1] | % Styrene[2] | temp °C | time hr. | yield % | % syndio-tactic $^{13}C$ | Mw x$10^3$ | melt pt.°C |
|---|---|---|---|---|---|---|---|---|---|---|
| 1 | $CpTi(OPh)_3$ | 6,000:500:1 | IPE | 20 | 51 | 20 | 97 | >95 | 166.4 | 249 |
| 2 | $CpTi(OPh)_3$ | 6,000:500:1 | IPE | 5 | 51 | 2.5 | 56.5 | 88 | 60.6 | 249 |
| 3 | $CpTi(OPh)_3$ | 18,000:500:1 | " | 20 | " | " | 60.3 | 95 | 145 | 250 |
| 4 | $CpTi(OPh)_3$ | 6,000:500:1 | toluene | 40 | " | " | 93.6 | 84 | 60.6 | 253 |
| 5 | $CpTi(OPh)_3$ | " | IPE | 20 | " | " | 82.1 | >94 | 90.0 | 250 |
| 6 | $CpTi(OEt)_3$ | " | " | " | 25 | " | 67.4 | 91 | 123 | 251 |
| 7 | $CpTi(OEt)_3$ | " | " | " | 51 | " | 91.1 | -- | 86.4 | 251 |
| 8 | Indenyl-$Ti(NMe_2)_3$ | 6,000:1,000:1 | " | 40 | 50 | 20 | 86.2 | >95 | 160 | 263 |
| 9 | $CpTi(NMe_2)_3$ | 6,000:500:1 | " | " | 51 | 2.5 | 71.7 | >84 | 102.9 | 255 |
| 10 | $CpTi(OPh)_3$ | 6,000:125:1 | IPE | 20 | 51 | 20 | 74.7 | 95 | 98.1 | -- |
| 11 | $CpTi(OPh)_3$ | 6,000:500:1 | IPE | 20 | 51 | 2.25 | 96.7 | 93 | 180.9 | 250 |
| 12 | $Me_5C_5Ti(OPh)_3$ | " | " | " | " | " | 95.1 | >95 | 343.0 | 268 |
| 13 | $Me_5C_5$-$Ti(OPh)Cl_2$ | " | " | " | " | " | 53.3 | 91 | 83.0 | 254 |

**Table I Continued**

| Ex | Complex | Ratio Styrene:Al:Ti | Solvent[1] | % styrene[2] | temp °C | time hr. | yield % | % syndio-tactic $^{13}C$ | Mw x10[3] | Melt pt.°C |
|---|---|---|---|---|---|---|---|---|---|---|
| 14 | $Me_5C_5TiCl_3$ [3] | 6,000:500:1 | IPE | 20 | 51 | 2.25 | 30.6 | >95 | 333.1 | -- |
| 15 | $CpTiCl_3$ [3] | 6,000:500:1 | " | 20 | " | 2.5 | 27.7 | -- | -- | 255.4 |
| 16 | $CpTi(NMe_2)_3$ | 6,000:500:1 | IPE | TBS 20 | 50 | 2.25 | 34.4 | >90 | -- | 306 |
| 17 | $CpTi(NMe_2)_3$ | " | " | PVT 20 | 50 | 2.25 | 34.4 | >90 | -- | 165 |
| 18 | $Me_5C_5Ti(OPh)_3$ | " | " | TBS 20 | 50 | 2.25 | 98 | >95 | -- | 308 |
| 19 | $Me_5C_5Ti(O\text{-}i\text{-}Pr)_3$ | " | " | TBS 20 | 50 | 2.25 | 99.2 | >95 | -- | 308 |
| 20 | $CpTi(OPh)_3$ | " | " | TBS 20 | 50 | 2.25 | 99.8 | >90 | -- | 291 |
| 21 | $CpTi(OPh)_3$ | " | " | PVT 70 | 50 | 2.0 | 96.9 | -- | 88.9 | 142 |
| 22 | $Me_5C_5Ti(OPh)_3$ | " | " | PVT 20 | " | " | 99.6 | >95 | 750.0 | 167 |
| 23 | $Me_5C_5Ti(O\text{-}i\text{-}Pr)_3$ | " | " | PVT 20 | " | " | 99.8 | >95 | 723.0 | 167 |
| 24 | $Me_5C_5Ti(OPh)_3$ | 6,000:500:1 | IPE | 20 | 50 | 2.25 | 83.1 | >95 | 509.0 | 271 |
| 25 | $Me_5C_5Ti(O\text{-}i\text{-}Pr)_3$ | " | " | " | " | " | 89.8 | >95 | 544.0 | 271 |
| 26 | $Me_4CpTi(O\text{-}i\text{-}Pr)_3$ | " | " | " | " | " | 80.9 | >93 | 201.0 | 271 |
| 27 | $EtMe_4C_5Ti\text{-}(O\text{-}i\text{-}Pr)_3$ | " | " | " | " | 2.0 | 76.5 | -- | 556.0 | -- |
| 28 | $[(Me_3Si)Cp]\text{-}Ti(O\text{-}i\text{-}Pr)_3$ | " | " | " | " | 2.0 | 74.2 | -- | 83.4 | -- |

**Table I Continued**

| Ex | Complex | Ratio Styrene:Al:Ti | Solvent[1] | % Styrene[2] | Temp °C | Time hr. | Yield % | % Syndio-tactic $^{13}C$ | Mw $x10^3$ | Melt pt.°C |
|---|---|---|---|---|---|---|---|---|---|---|
| 29 | $Me_5C_5Ti(OPh)_3$ | 6,000:500:1 | IPE | 20 | 50 | 2.0 | 72.0 | -- | 784.0 | -- |
| 30 | $Me_5C_5Ti(O\text{-}i\text{-}Pr)_3$ | " | " | " | " | " | 48.2 | -- | 864.0 | -- |
| 31 | $EtMe_4C_5Ti\text{-}(O\text{-}i\text{-}Pr)_3$ | " | " | " | " | " | 44.0 | -- | 1,070.0 | -- |
| 32 | $[(Me_3Si)Cp]\text{-}Ti(O\text{-}i\text{-}Pr)_3$ | " | " | " | " | " | 33.8 | -- | 69.8 | -- |
| 33 | $Me_5C_5Ti(OPh)_3$ | 6,000:500:1 | IPE | Para-Br-Styene 20 | 50 | 2.25 | 3.3 | -- | -- | 298 |
| 34 | $Me_5C_5Ti(O\text{-}i\text{-}Pr)_3$ | " | " | " | " | " | 3.8 | -- | -- | 296 |
| 35 | $CpTi(OPh)_3$ | " | " | " | " | " | 2.3 | -- | -- | -- |
| 36 | $Me_5C_5Ti(OPh)_3$ | 6,000:500:1 | IPE | Para-Cl-Styrene 20 | 50 | 4.0 | 2.8 | -- | -- | 296 |
| 37 | $Me_5C_5Ti(O\text{-}i\text{-}Pr)_3$ | " | " | " | " | " | 2.8 | -- | -- | -- |
| 38 | $CpTi(OPh)_3$ | " | " | " | " | " | 3.8 | -- | -- | 292 |
| 39 | $Me_5C_5Ti(OPh)_3$ | 6,000:500:1 | MCH | 20 | 50 | 2 | 98.6 | -- | -- | 307 |
| 40 | $Indenyl\text{-}Ti(NMe_2)_3$ | 6,000:500/1 | MCH | 20 | 50 | 7 | 63.0 | -- | -- | 308 |

## Table I Continued

| Ex | Complex | Ratio Styrene:Al:Ti | Solvent[1] | % Styrene[2] | Temp °C | Time hr. | Yield % | % Syndiotactic $^{13}C$ | Mw x$10^3$ | Melt pt.°C |
|---|---|---|---|---|---|---|---|---|---|---|
| 41 | $MeCpTi(NMe_2)_3$ | " | " | " | " | " | 87.9 | -- | -- | 300 |
| 42 | $CpTi(NMe_2)_3$ | " | " | " | " | " | 93.4 | -- | -- | 291 |
| 43 | $Me_5C_5Ti(OPh)_3$ | 6,000:500:1 | MCH | 20 | 50 | 2 | 98.8 | -- | -- | 158[4]<br>181 |
| 44 | Indenyl-$Ti(NMe_2)_3$ | " | " | " | " | 7 | 49.9 | -- | -- | 165[4]<br>183 |
| 45 | $MeCpTi(NMe_2)_3$ | " | " | " | " | " | 38.4 | -- | -- | 168[4]<br>182 |
| 46 | $CpTi(NMe_2)_3$ | " | " | " | " | " | 31.4 | -- | -- | 155[4]<br>174 |
| 47 | $Me_5C_5Ti(OPh)_3$ | " | " | " | " | 2 | 99.6 | -- | -- | 271 |
| 48 | Indenyl-$Ti(NMe_2)_3$ | " | " | " | " | 2.75 | 49.6 | -- | -- | 265 |

**Table I Continued**

| Ex | Complex | Ratio styrene:Al:Ti | Solvent[1] | % Styrene[2] | Temp °C | Time hr. | Yield % | % Syndiotactic $^{13}C$ | Mw x10³ | Melt pt. °C |
|---|---|---|---|---|---|---|---|---|---|---|
| 49 | $MeCpTi(NMe_2)_3$ | 6,000:500:1 | MCH | 20 | 50 | 2.75 | 46.0 | -- | -- | 264 |
| 50 | $CpTi(NMe_2)_3$ | " | " | " | " | " | 44.2 | -- | -- | 266 |
| 51 | $CpTi(NPh_2)_3$ | " | " | " | " | 4 | -- | -- | -- | -- |
| 52 | $CpTi(N(Butyl)_2)_3$ | " | " | " | " | 4 | -- | -- | -- | -- |
| 53 | $Me_5C_5Ti(OPh)_3$ | " | " | OVT 20 | " | 4 | -- | -- | -- | -- |

[1]IPE = Isopar - E™, MCH - Methylcyclohexane

[2]Weight Percent of reaction mixture
TBS = p-tert butyl styrene
PVT = p-vinyl toluene
OVT = Ortho-vinyl toluene

[3]Comparative examples

[4]Two melting peaks

## Claims

1. A process for preparing polymers of vinyl aromatic monomers having a high degree of syndiotacticity comprising contacting one or more aromatic monomers under polymerization conditions with a

catalytically effective amount of a catalyst comprising the reaction product of polymethylaluminoxane and a monocyclopentadienyl/titanium complex corresponding to the formula: $CpTiX_3$, wherein Cp is a $\pi$-bonded cyclopentadienyl group, a $\pi$-bonded substituted or multiply substituted cyclopentadienyl group or a $\pi$-bonded monovalent oligomer of cyclopentadiene and X is independently each occurrence halide, OR, or $NR_2$, wherein R is independently each occurrence an aliphatic, cycloaliphatic or aromatic hydrocarbon group having from 1 to 12 carbon atoms; and provided further that in at least one occurrence X is OR or $NR_2$ and the ratio of Al:Ti in said catalyst is from 10:1 to 50,000:1.

**2.** A process according to Claim 1, wherein the polymethylaluminoxane and titanium complex are employed in quantities which provide an atomic ratio of Al:Ti of from 50:1 to 10,000:1.

**3.** A process according to Claim 1, wherein the polymethylaluminoxane and titanium complex are employed in quantities which provide an atomic ratio of Al:Ti of from 100:1 to 1000:1.

**4.** A process according to Claim 1, wherein the monomer is contacted with the catalyst at a temperature from 25 °C to 100 °C.

**5.** A process according to Claim 1, wherein an inert diluent is additionally present.

**6.** A process according to Claim 1, wherein the polymer has a molecular structure containing greater than 70 percent syndiotaotic.

**7.** A process according to Claim 1, wherein X is OR in each occurrence and R is selected from the group consisting of phenyl and $C_{1-6}$ alkyl.

**8.** A composition of matter comprising the reaction product of polymethylaluminoxane and a complex corresponding to the formula: $CpTiX_3$, wherein Cp is a $\pi$-bonded cyclopentadienyl group, a $\pi$-bonded substituted cyclopentadienyl group or a $\pi$-bonded monovalent oligomer of cyclopentadiene and X is independently each occurrence halide, OR, or $NR_2$, wherein R is independently each occurrence an aliphatic, cycloaliphatic or aromatic hydrocarbon group having from 1 to 12 carbon atoms; and provided further that in at least one occurrence X is OR or $NR_2$ and the ratio of Al:Ti is from 10:1 to 50,000:1.

**9.** A composition of matter according to Claim 8, wherein X is $NR_2$ and R is $CH_3$.

**10.** A composition of matter according to Claim 8, wherein X is in each occurrence OR and R is phenyl, $C_{1-6}$ alkyl or cycloalkyl

**Patentansprüche**

**1.** Verfahren zur Herstellung von Polymeren vinylaromatischer Verbindungen mit einem hohen Grad an Syndiotaktizität, dadurch gekennzeichnet, daß man ein oder mehrere vinylaromatische Monomere unter Polymerisationsbedingungen mit einer wirksamen Menge eines Katalysators in Berührung bringt, der das Reaktionsprodukt eines Polymethylaluminoxans und eines Monocyclopentadienyl-Titan-Komplexes der allgemeinen Formel $CpTiX_3$ ist, in der Cp eine $\pi$-gebundene Cyclopentadienyl-Gruppe, eine $\pi$-gebundene substituierte oder mehrfachsubstituierte Cyclopentadienyl-Gruppe oder ein $\pi$-gebundenes einwertiges Oligomeres des Cyclopentadiens bezeichnet und X unabhängig bei jedem Vorkommen Halogen, OR oder $NR_2$ bedeutet, wobei R unabhängig bei jedem Vorkommen einen aliphatischen, cycloaliphatischen oder aromatischen Kohlenwasserstoffrest mit 1 bis 12 Kohlenstoffatomen bezeichnet; mit der Maßgabe, daß X mindestens einmal OR oder $NR_2$ bezeichnet und das Verhältnis von Al:Ti in dem genannten Katalysator von 10:1 bis 50.000:1 beträgt.

**2.** Verfahren nach Anspruch 1, dadurch gekennzeichnet, daß das Polymethylaluminoxan und der Titan-Komplex in Mengen eingesetzt werden, die ein Atomverhältnis von Al:Ti von 50:1 bis 10.000:1 ergeben.

**3.** Verfahren nach Anspruch 1, dadurch gekennzeichnet, daß das Polymethylaluminoxan und der Titan-Komplex in Mengen eingesetzt werden, die ein Atomverhältnis von Al:Ti von 100:1 bis 1.000:1 ergeben.

4. Verfahren nach Anspruch 1, dadurch gekennzeichnet, daß das Monomere mit dem Katalysator bei einer Temperatur von 25 °C bis 100 °C in Berührung gebracht wird.

5. Verfahren nach Anspruch 1, dadurch gekennzeichnet, daß zusätzlich ein inertes Verdünnungsmittel zugegen ist.

6. Verfahren nach Anspruch 1, dadurch gekennzeichnet, daß das Polymere eine Molekularstruktur aufweist, die zu mehr als 70% syndiotaktisch ist.

7. Verfahren nach Anspruch 1, dadurch gekennzeichnet, daß X für OR steht und jeder Rest R Phenyl oder einen Alkylrest mit 1 bis 6 Kohlenstoffatomen bedeutet.

8. Stoffmischung, dadurch gekennzeichnet, daß sie das Reaktionsprodukt eines Polymethylaluminoxans und eines Monocyclopentadienyl-Titan-Komplexes der allgemeinen Formel $CpTiX_3$ enthält, in der Cp eine $\pi$-gebundene Cyclopentadienyl-Gruppe, eine $\pi$-gebundene substituierte oder mehrfachsubstituierte Cyclopentadienyl-Gruppe oder ein $\pi$-gebundenes einwertiges Oligomeres des Cyclopentadiens bezeichnet und X unabhängig bei jedem Vorkommen Halogen, OR oder $NR_2$ bedeutet, wobei R unabhängig bei jedem Vorkommen einen aliphatischen, cycloaliphatischen oder aromatischen Kohlenwasserstoffrest mit 1 bis 12 Kohlenstoffatomen bezeichnet; mit der Maßgabe, daß X mindestens einmal OR oder $NR_2$ bezeichnet und das Verhältnis von Al:Ti in dem genannten Katalysator von 10:1 bis 50.000:1 beträgt.

9. Stoffmischung nach Anspruch 8, dadurch gekennzeichnet, daß X für $NR_2$ steht und R Methyl bedeutet.

10. Stoffmischung nach Anspruch 8, dadurch gekennzeichnet, daß X bei jedem Vorkommen OR bezeichnet und R für Phenyl, einen Alkylrest mit 1 bis 6 Kohlenstoffatomen oder Cycloalkyl steht.

**Revendications**

1. Procédé de préparation de polymères de monomères vinyl aromatiques ayant un degré élevé de syndiotacticité, comprenant la mise en contact d'un ou plusieurs monomères aromatiques dans des conditions de polymérisation avec une quantité catalytiquement efficace d'un catalyseur, comprenant le produit de la réaction du polyméthylaluminoxane et d'un complexe monocyclopentadiényle/titane correspondant à la formule: $CpTiX_3$, dans laquelle Cp représente un groupe cyclopentadiényle lié par une liaison $\pi$, un groupe cyclopentadiényle substitué lié par une liaison $\pi$, ou à substitution multiple, ou un oligomère monovalent lié par une liaison $\pi$ de cyclopentadiène, et X représente indépendamment dans chaque cas un halogénure, OR, ou $NR_2$, dans lequel R représente indépendamment dans chaque cas un groupe hydrocarboné aliphatique, cycloaliphatique ou aromatique, ayant de 1 à 12 atomes de carbone; étant entendu que dans au moins un cas X représente un groupe OR ou $NR_2$ et que le rapport de Al:Ti dans ledit catalyseur soit de 10:1 à 50 000:1.

2. Procédé selon la revendication 1, dans lequel le polyméthylaluminoxane et le complexe de titane sont employés en des quantités telles que le rapport atomique soit de Al:Ti de 50:1 à 10 000:1.

3. Procédé selon la revendication 1, dans lequel le polyméthylaluminoxane et le complexe de titane sont employés en des quantités telles que le rapport atomique soit de Al:Ti de 100:1 à 1 000:1.

4. Procédé selon la revendication 1, dans lequel le monomère en mis en contact avec le catalyseur à une température de 25 °C à 100 °C.

5. Procédé selon la revendication 1, dans lequel un diluant inerte est également présent.

6. Procédé selon la revendication 1, dans lequel le polymère a une structure moléculaire contenant plus de 70 pourcent de polymère syndiotactique.

7. Procédé selon la revendication 1, dans lequel X représente un groupe OR dans chaque cas et R est choisi dans le groupe constitué de phényle et d'alkyle en $C_1$ à $C_6$.

**8.** Composition de matière comprenant le produit réactionnel de polyméthylaluminoxane et un complexe correspondant à la formule: $CpTiX_3$, dans laquelle Cp représente un groupe cyclopentadiényle lié par une liaison $\pi$, un groupe cyclopentadiényle substitué lié par une liaison $\pi$, ou un oligomère monovalent lié par une liaison $\pi$ de cyclopentadiène, et X représente indépendamment dans chaque cas un halogénure, OR, ou $NR_2$, dans lequel R représente indépendamment dans chaque cas un groupe hydrocarboné aliphatique, cycloaliphatique ou aromatique, ayant de 1 à 12 atomes de carbone; étant entendu que dans au moins un cas X représente un groupe OR ou $NR_2$ et que le rapport de Al:Ti est de 10:1 à 50 000:1.

**9.** Composition de matière selon la revendication 8, dans laquelle X représente un groupe $NR_2$ et R représente un groupe $CH_3$.

**10.** Composition de matière selon la revendication 8, dans laquelle X représente dans chaque cas OR, et R représente un groupe phényle, alkyle en $C_1$ à $C_6$ ou cycloalkyle.